# EUROPÄISCHE PATENTANMELDUNG

(11) **EP 4 678 533 A1**
(43) Veröffentlichungstag der Anmeldung: **14.01.2026**
(21) Anmeldenummer: 25187443.4
(22) Anmeldetag: 04.07.2025
(51) Int. Cl.: B64D 11/06, B64D 13/06

(54) **PSU MIT VENTILATORISCHER KABINENLUFTDUSCHE**

(30) Priorität: 09.07.2024 DE 102024119504
(71) Anmelder: Diehl Aviation Laupheim GmbH, 88471 Laupheim (DE)
(72) Erfinder: Pfinder, Dirk, 88481 Balzheim (DE)
(74) Vertreter: Diehl Patentabteilung

(57) **Zusammenfassung**

Bei einer PSU (2) für eine bestimmungsgemäße Passagierkabine (4) eines Passagierflugzeugs (2) mit einer Mehrzahl von Sitzplätzen (8) für Passagiere (10) und wenigstens einem über den Sitzplätzen (8) angeordneten PSC (14),
- mit einem Grundkörper (22), der dazu eingerichtet ist, die PSU (20) in einem bestimmungsgemäßen Einbauzustand (EZ) im PSC (14) zu montieren,
- mit einer am Grundkörper (22) angeordneten Luftführung (24),
- die wenigstens eine Einlassöffnung (28) und wenigstens eine Luftdusche (30) und einen die Einlassöffnungen (28) luftdicht mit den Luftduschen (30) verbindenden Luftkanal (32) enthält,
- und die im Einbauzustand (EZ) zur Führung von ausschließlich in der Passagierkabine (4) frei vorhandene Kabinenluft (26) eingerichtet ist,
- wobei jede der Luftduschen (30) im Einbauzustand (EZ) zur Belüftung wenigstens eines der Sitzplätze (8) mit Kabinenluft (26) eingerichtet ist,
- enthält die Luftführung (24) wenigstens einen Ventilator (34), und die Ventilatoren (34) sind im Einbauzustand (EZ) zur Förderung der Kabinenluft (26) von den Einlassöffnungen (28) durch den Luftkanal (32) zu den Luftduschen (30) eingerichtet.

## Beschreibung

Die Erfindung betrifft eine Luftdusche in einer PSU (Passenger Service Unit) für eine Passagierkabine eines Passagierflugzeuges. In solchen Passagierkabinen sind Sitze bzw. Sitzreihen angeordnet, auf denen im Betrieb des Passagierflugzeuges, also während eines Fluges, Passagiere Platz nehmen. Oberhalb der Köpfe der sitzenden Passagiere sind die PSUs in einem PSC (Passenger Service Channel) montiert. Aus den Luftduschen in den PSUs können die Passagiere mit Frischluft beströmt werden.

Aus der DE 10 2010 024 265 A1 ist eine Belüftungseinrichtung für eine Passagierkabine in einem Flugzeug bekannt. Diese umfasst einen Versorgungskanal (PSC) und mehrere Versorgungseinheiten (PSU), die jeweils wenigstens eine Luftauslassvorrichtung (Luftdusche) aufweisen. Zur Vereinfachung der Belüftungseinrichtung ist vorgesehen, dass der Versorgungskanal luftdicht ausgebildet und an eine Klimatisierungsanlage anschließbar ist und dass die mehreren Versorgungseinheiten derart in den Versorgungskanal eingebaut sind, dass deren Luftauslassvorrichtungen jeweils mit dem Innenraum des Versorgungskanals in Verbindung stehen.

Aufgabe der vorliegenden Erfindung ist es, Verbesserungen in Bezug auf PSUs mit Luftduschen vorzuschlagen.

Die Aufgabe wird gelöst durch eine PSU (Passenger Service Unit, Passagierserviceeinheit) gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Die PSU ist eine solche für eine bestimmungsgemäße Passagierkabine (kurz "Kabine") eines bestimmungsgemäßen Passagierflugzeuges (kurz "Flugzeug"). Das Flugzeug weist die Kabine mit einer Mehrzahl von Sitzplätzen für Passagiere auf. Das Flugzeug bzw. die Kabine weist außerdem wenigstens einen über den Sitzplätzen angeordneten PSC (Passenger Service Channel, Passagierversorgungskanal) auf.

"Bestimmungsgemäß" heißt, dass die PSU auf bestimmte oder bestimmte Typen von Passagierflugzeugen / Passagierkabinen konstruktiv abgestimmt ist und für den Einsatz dort eingerichtet ist; z.B. für die dadurch bestimmten Geometrie- und Systemanforderungen usw. ausgelegt ist. Mit anderen Worten werden insbesondere betreffende Passagierflugzeuge / Passagierkabinen als bekannt hinsichtlich ihrer Geometrie- und Systemanforderungen usw. vorausgesetzt. Konkret werden also die vorliegend genannten Eigenschaften des Passagierflugzeuges / der Passagierkabine (Sitzplätze, PSC, ...) vorausgesetzt.

Der Begriff "Passagierflugzeug" ist hier weit zu verstehen und schließt neben Großraumflugzeugen auch andere Fluggeräte zum Passagiertransport ein wie z.B. VTOLs (Vertical Takeoff and Landing), Hubschrauber, Kleinflugzeuge usw. ein.

Die PSU enthält einen Grundkörper. Der Grundkörper ist dazu eingerichtet, die PSU in einem bestimmungsgemäßen Einbauzustand im PSC zu montieren bzw. zu befestigen / fixieren. Der Einbauzustand ist also ein Endzustand, wenn die PSU bestimmungsgemäß im PSC über den Passagier sitzen bzw. Sitzplätzen in der Passagierkabine bzw. dem - flugzeug montiert ist. Insbesondere findet im Einbauzustand auch ein Betriebszustand der PSU statt, wenn also insbesondere das Flugzeug einen Flug absolviert und Passagiere auf den entsprechenden Sitzplätzen Platz genommen haben und Luft aus den Luftduschen beziehen. Der Grundkörper bildet mit anderen Worten eine Tragstruktur oder Grundgerüst der PSU.

Die PSU enthält eine Luftführung, die am Grundkörper angeordnet ist. "Am Grundkörper" ist hier ebenfalls weit zu verstehen: Dies schließt z.B. auch eine Montage im Grundkörper ein, oder die Tatsache, dass Grundkörper und Luftführung zumindest teilweise zusammenfallen / sich gegenseitig bilden. Die Luftführung enthält wenigstens eine Einlassöffnung und wenigstens eine Luftdusche, also Ausströmdüse, und einen Luftkanal. Der Luftkanal verbindet die Einlassöffnungen luftdicht mit den Luftduschen. Mit anderen Worten kann Luft durch die Einlassöffnungen in die Luftführung eintreten, durch den Luftkanal strömen und diesen an den Luftduschen wieder verlassen. Die Luft wird dabei vom Luftkanal geführt. Die Luftführung ist dazu eingerichtet, im Einbauzustand der PSU ausschließlich Kabinenluft zu führen.

Jede der Luftduschen ist auch dazu eingerichtet, im Einbauzustand wenigstens einen der Sitzplätze mit Kabinenluft zu belüften.

"Kabinenluft" ist dabei insbesondere so zu verstehen, dass diese - insbesondere unmittelbar an den Einlassöffnungen - dem Freiraum der Kabine entnommen ist und nicht etwa aus einem Luftführungskanal stammt, der Luft eigens zu diesem Zweck der PSU zuführt. Es handelt sich also um in der Kabine bzw. deren freien Raum frei verfügbare bzw. vorhandene, ungeführte, nicht eingehauste Luft.

Die Luftführung enthält wenigstens einen (insbesondere elektrisch betriebenen) Ventilator. Der Ventilator ist im Einbauzustand bzw. im Betrieb / Betriebszustand (seinem und dem der PSU) dazu eingerichtet, Kabinenluft von der Einlassöffnung durch den Luftkanal zu den Luftduschen zu fördern. Mit anderen Worten saugt der Ventilator durch seinen Betrieb also Luft aus dem Freiraum der Passagierkabine an, fördert sie durch den Luftkanal und stößt sie an den Luftduschen wieder in den Freiraum der Passagierkabine zu den Sitzplätzen hin aus. Der Ventilator - zumindest dessen luftfördernde Schaufeln / Blätter / etc. - befindet sich damit insbesondere im Inneren der Luftführung bzw. des Luftkanals.

Gemäß der Erfindung ist also kein Anschluss der Luftführung an eine Frischluft- oder Klimazuleitung / -verrohrung / -versorgungsleitung des Flugzeuges notwendig. Es erfolgt mit anderen Worten eine simple bzw. einfache Ansaugung / Umwälzung von in der Kabine bereits vorhandener / freier Kabinenluft, um diese gezielt als Luftströmung aus den Luftduschen den Sitzplätzen bzw. darauf sitzenden Passagieren zuzuführen.

Für die Ventilatoren sind insbesondere axiale oder auch radiale Bauformen möglich.

Dadurch, dass die PSU / Luftführung / Luftkanal / Luftduschen nicht an eine Frischluft- oder Klimazuleitung / -verrohrung / -versorgungsleitung des Flugzeuges angeschlossen werden muss, vereinfacht sich der Installationsaufwand im Passagierflugzeug und es erfolgt eine Gewichtseinsparung.

In einer bevorzugten Ausführungsform weist die PSU ein Gehäuse auf. Das Gehäuse kann dabei auch Teil des Grundkörpers sein oder der Grundkörper Teil des Gehäuses. Zumindest ein Teil des Luftkanals ist als zumindest Teil des Gehäuses ausgeführt. Mit anderen Worten bilden zumindest Teile einer Gehäusewandung Teile einer Wandung des Luftkanals. Dank des Gehäuses kann ein gehauster Grundkörper bzw. PSU realisiert werden, wobei das Gehäuse eine Doppelfunktion als Einhausung der PSU und gleichzeitig zur Luftleitung als Luftkanal erfüllt.

In einer bevorzugten Ausführungsform ist wenigstens eine der Luftduschen bezüglich einer Abstrahlrichtung (z.B. Richtung eines Zentralstrahls der abgestrahlten Luft) der Kabinenluft einstellbar, also veränderbar bzw. neigbar. Die Einstellung kann insbesondere von den Passagieren vorgenommen werden, um sich wunschgemäß mit Kabinenluft belüften zu lassen. Die Einstellbarkeit bezieht sich auf die gesamte Luftdusche oder einen Teil dieser, z.B. ein Ausström-Endrohr, eine Ablenkblende usw. Durch eine entsprechend einstellbare Luftdusche wird der Belüftungskomfort für Passagiere erhöht. Die Einstellung kann insbesondere besonders einfach händisch erfolgen.

In einer bevorzugten Ausführungsform weist wenigstens einer der Ventilatoren eine - insbesondere von den Passagieren und / oder zentral im Flugzeug - einstellbare Drehzahlsteuerung bzw. -Regelung auf. Mit anderen Worten kann also die Drehzahl des Ventilators und damit die von ihm geförderte Luftmenge verändert werden, was zu einer Veränderung der aus den Luftduschen gelieferten Luftmenge führt. Es existiert also insbesondere eine Bedienschnittstelle zu Passagieren und / oder Flugpersonal und/oder einem Bordsystem / bordeigenen Kommunikationsnetzwerk, um die entsprechende Drehzahlsteuerung / -regelung durchzuführen. So kann einerseits von Personen und / oder andererseits zentral im Flugzeug, z.B. auch automatisch, die Luftmenge gesteuert werden, die aus einzelnen oder allen Luftduschen ausströmt. Durch die zentrale Steuerung kann beispielsweise (ohne dass Passagiere eingreifen müssten oder jede einzelne Luftdusche händisch verstellt werden müsste) eine besonders gute Durchlüftung der Passagierkabine erfolgen, wenn alle Ventilatoren in der Drehzahl erhöht werden.

In einer bevorzugten Ausführungsform weist die PSU einen Oberflächenabschnitt auf, welcher im Montage- bzw. Einbauzustand (der PSU im Flugzeug) der Passagierkabine zugewandt ist. Der Oberflächenabschnitt ist insbesondere eine Sichtseite der PSU im Einbauzustand, welche also von der Passagierkabine aus sichtbar ist. An diesem Oberflächenabschnitt ist daher freie Kabinenluft, also Luft im Freiraum der Passagierkabine, zur Ansaugung zugänglich bzw. verfügbar. Wenigstens eine der Einlassöffnung ist als Teil des Oberflächenabschnitts ausgeführt. Insbesondere sind sämtliche Einlassöffnungen an dem entsprechenden Oberflächenabschnitt angeordnet, um besonders effektiv Kabinenluft aufnehmen / ansaugen zu können. Diese Ausführungsform bietet den Vorteil, dass keine verbrauchte Luft in die Einlassöffnungen angesaugt wird: Die Erfindung geht dabei davon aus, dass eine Belüftung in der Passagierkabine immer von oben (Decke) nach unten (Boden) geführt wird und somit im oberen Bereich der Passagierkabine, in welchem sich die PSU im Einbauzustand befindet, stets unverbrauchte Frischluft vorhanden ist.

In einer bevorzugten Variante dieser Ausführungsform ist wenigstens eine der Einlassöffnungen als Gitter und / oder Spalt und/oder Lamellenanordnung im Oberflächenabschnitt ausgeführt. So können an der zugänglichen Oberfläche bzw. Sichtseite optisch besonders ansprechende PSUs bzw. deren Oberflächen geschaffen werden.

In einer weiteren bevorzugten Variante dieser Ausführungsform enthält die PSU einen Lautsprecher und eine Schallöffnung, die dem Lautsprecher zugeordnet ist. Die SchallÖffnung ist ebenfalls in dem Oberflächenabschnitt enthalten. Durch die Schallöffnung kann im Lautsprecher erzeugter Schall durch den Oberflächenabschnitt aus der PSU in die Passagierkabine austreten, um Schall effektiv in diese abstrahlen zu können. Der Lautsprecher dient insbesondere zur Wiedergabe von Durchsagen / Warntönen im Flugzeug an die Passagiere. Wenigstens ein Teil einer der Einlassöffnungen ist als zumindest Teil der Schallöffnung ausgeführt. Die entsprechende Öffnung erfährt dann eine synergetische Doppelnutzung, einerseits zum Austritt von Schall, andererseits zum Einlassen von Kabinenluft in die Luftführung bzw. den Luftkanal.

In einer bevorzugten Ausführungsform ist gemäß einer ersten Alternative jeder der Luftduschen genau einer der Ventilatoren zugeordnet. Mit anderen Worten enthält die PSU eine gleiche Anzahl von Luftduschen und Ventilatoren. So kann für jede Luftdusche individuell je einer der Ventilatoren den entsprechenden Luftstrom durch diese Luftdusche verursachen. Insbesondere ist eine individuelle Steuerung bzw. Regelung des Luftstromes für jede der Luftduschen dadurch besonders einfach möglich, dass die Drehzahl des zugehörigen Ventilators individuell einstellbar ist. Die Luftduschen sind so besonders gut hinsichtlich ihrer Luftströmung einstellbar.

Insbesondere ist der Durchsatz der Luftduschen / die Durchlassmenge der Luftduschen hier allein durch die Drehzahl der Ventilatoren bestimmt. Es sind also keinerlei mechanische Klappen drosseln etc. in den Luftduschen vorhanden. Dies ermöglicht die Ansteuerung der Luftduschen in elektrischer Form, z.B. durch eine Touch-Bedienung. Auch ist so eine vollständige zentrale rein elektrische Steuerung der Belüftung der Luftdusche seitens Flugzeug / Bordpersonal möglich.

In einer bevorzugten Ausführungsform gemäß einer zweiten Alternative weist die PSU einen einzigen Ventilator auf, der wenigstens zwei, insbesondere allen, der Luftduschen gemeinsam zugeordnet ist, also für diese Luftduschen gemeinsam zuständig ist. Mit anderen Worten fördert der einzige Ventilator sämtliche Luft, die durch mehrere oder alle Luftduschen gemeinsam entweicht. Somit wird eine besonders einfache und kostengünstige PSU geschaffen, da nur ein einziger Ventilator notwendig ist.

In einer bevorzugten Variante dieser Ausführungsform sind hier dennoch wenigstens zwei, insbesondere jede der Luftduschen individuell (z.B. von den Passagieren) hinsichtlich ihrer Durchlassmenge (Ausströmmenge pro Zeit) an Kabinenluft einstellbar. Die Einstellbarkeit kann hier insbesondere mechanisch durch Ventile / Blenden / Klappen / Düsen usw. umgesetzt werden. Dies erhöht den Komfort einzelner Passagiere, die verschiedene Luftduschen der selben PSU nutzen.

In einer bevorzugten Ausführungsform enthält die PSU eine Druckdifferenzsteuerung. Diese ist dazu eingerichtet, eine aktuelle Drehzahl wenigstens eines, insbesondere mehrerer oder aller, der Ventilatoren an die aktuellen (insbesondere aktuell eingestellten, wenn veränderbar) Durchlassmengen einer bestimmten, mehrerer oder insbesondere aller Luftduschen dieser PSU anzupassen. Die Anpassung erfolgt insbesondere derart, dass der eingestellte Luftstrom an einer bestimmten Luftdusche sich nicht verändert, wenn die Durchlassmenge an einer anderen der Luftduschen verändert wird. Dies erhöht den Komfort für Passagiere, die mit einem konstanten (insbesondere dem von Ihnen aktuell eingestellten) Luftstrom in gleichbleibender Stärke versorgt sind, unabhängig davon, wie eventuell andere Passagiere andere Luftduschen der gleichen PSU einstellen / bezüglich der Durchlassmenge verändern.

Diese Ausführungsform eignet sich besonders in Kombination mit einem einzigen Ventilator pro PSU, da dort die gegenseitige Abhängigkeit veränderbarer Luftströme verschiedener Luftduschen besonders ausgeprägt ist. Z.B. wird die Drehzahl des einzigen Ventilators erhöht, mit anderen Worten mehr Luft durch den Luftkanal gefördert, wenn eine Luftdusche in der PSU ihre Durchlassmenge erhöht, um den Durchlass an den anderen Luftduschen konstant zu halten, und umgekehrt.

In einer bevorzugten Ausführungsform enthält die PSU wenigstens ein Elektronikbauteil, insbesondere ein solches, welches im Einbauzustand bzw. im Betrieb der PSU zu kühlen ist. "Elektronikbauteil" ist hierbei weit zu verstehen und meint sämtliche elektrischen Geräte, zum Beispiel auch Leseleuchten usw. Zumindest ein Teil des Elektronikbauteils ist in thermisch vom Bauteil wärmeabführendem Kontakt zum Luftkanal bzw. der darin strömenden Luft angeordnet. Die Anordnung erfolgt insbesondere am (in Kontakt mit dem) oder sogar wenigstens teilweise im (das Elektronikbauteil ragt in den Luftkanal hinein oder liegt vollständig in diesem) Luftkanal. Der Begriff "Teil des Elektronikbauteils" ist ebenfalls weit zu verstehen kann sich auf das Bauteil selbst oder auch ein auf ein mit diesem wärmegekoppeltes Element, zum Beispiel einen Kühlkörper beziehen.

Insbesondere ist konstruktiv sichergestellt, dass in Bezug auf das Elektronikbauteil immer eine kühlende Mindestströmung im Luftkanal herrscht, z.B. durch Schaffung eines Bypasses an den Luftduschen, der nicht auf die Passagiere gerichtet ist, oder einer Zirkulation im Luftkanal / der Luftführung usw.

Somit kann durch die vorbeiströmende Kabinenluft im Betrieb das Elektronikbauteil in synergetischer Weise mit der Belüftung der Sitzplätze gekühlt werden, da diese Wärme aus dem Elektronikbauteil aufnimmt und abtransportiert.

In einer bevorzugten Ausführungsform enthält die Luftführung, insbesondere der Luftkanal
- ein lonisiermodul, das zur Ionisierung der vorbei-/durchströmenden Kabinenluft eingerichtet ist
- und / oder ein Entkeimungsmodul, das zur Entkeimung der vorbei-/durchströmenden Kabinenluft eingerichtet ist,
- und / oder ein Temperatur-(insbesondere nur Kühl-)modul, das zur Temperaturbeeinflussung (Wärmen/Kühlen) der vorbei-/durchströmenden Kabinenluft eingerichtet ist, für jeweils zumindest einen Teil der geförderten Kabinenluft.

Das Entkeimungsmodul ist beispielsweise ein Plasma- und / oder UV-Licht-Modul. Durch entsprechende Maßnahmen kann der Passagierkomfort bzw. die Qualität der Luft in der Passagierkabine gesteigert werden. Die Kühlung der Luft ist insbesondere mit der Ausführungsform kombiniert, bei der ein Elektronikbauteil zu kühlen ist.

Die Module sind insbesondere im Inneren des Luftkanals angeordnet.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung ergibt sich insbesondere eine Luftdusche mit Lüfter - also eine lokale Erzeugung der Individualbelüftung in einer Passanger Service Unit (PSU).

Grundidee der Erfindung ist: Mittels Ventilatoren in / innerhalb der PSU wird die Luftdusche lokal mit Luft versorgt statt durch eine eigene Zuleitung vom Flugzeug.

Die Erfindung beruht auf der Beobachtung, dass in der Praxis jede einzelne Luftdusche durch eine eigene Verrohrung vom Flugzeug mit Luft versorgt wird.

Gemäß der Erfindung wird die Luftdusche lokal mittels eines (kleinen) Ventilators / Lüfters mit Luft versorgt. Über eine Drehzahlregelung kann der Bediener insbesondere stufenlos den gewünschten Luftzug einstellen.

Durch die lokale Bereitstellung der Luft entfallen die Versorgungsleitungen im Flugzeug. Des Weiteren ergibt sich ein Vorteil bei der Konfiguration / Rekonfiguration der Sitzreihen, da eine Schnittstelle zum Flugzeug entfällt. Dadurch muss keine Veränderung an der Klimaverrohrung vorgenommen werden. Außerdem benötigt die vorgeschlagene Lösung weniger Bauraum auf der Rückseite (Oberseite der PSU, dem Inneren des PSC zugewandt) und vereinfacht aufgrund der fehlenden Schnittstelle den Einbau. In der Gesamtbetrachtung ergibt sich eine Gewichtseinsparung im Flugzeug, der ein geringer Mehrbedarf an elektrischer Energie für die Lüfter entgegensteht.

Durch die Integration der Lüfter in die Luftdusche ergeben sich o.g. Vorteile. Durch insbesondere eine Kombination mit einer Steuerung über das Netzwerk des Flugzeuges ergeben sich weitere Vorteile.

Durch eine geeignete Anordnung der Zuströmung (Einlassöffnung / Gitter/ Spalte) wird (Kabinen-)Luft geräuscharm an der Oberfläche der PSU nach hinten (also gegenüber der Sichtseite, also ins "Innere" der PSU) zu dem Lüfter (Ventilator) geführt. Dadurch wird verhindert, dass verbrauchte Luft zur Luftdusche geführt wird. Der insbesondere drehzahlgeregelte Lüfter beschleunigt den Luftstrom so, dass für den Passagier ein erfrischender Luftzug entsteht, der aus den Luftduschen ausströmt. Durch eine entsprechende Regeleinheit kann insbesondere die gewünschte Luftgeschwindigkeit eingestellt werden. Als Lüfter können sowohl axiale als auch radiale Bauformen verwendet werden, je nach zur Verfügung stehendem Bauraum. Zur zusätzlichen Luftaufbereitung kann insbesondere eine Ionisierung der Luft, und / oder auch eine Entkeimung durch Plasma oder UV-Licht integriert werden.

Die Zuluft zum Ventilator kommt also aus der Kabine. Das Gehäuse der PSU kann ein Luftführungselement (Luftkanal) bilden. Die Luftdusche ist insbesondere neigbar.

Durch Nutzung insbesondere eines Radiallüfters oder einer ähnlichen Ausführung kann der Luftstrom für alle Luftduschen erzeugt werden. Durch Kanäle auf der PSU (Luftkanal, kann auch mehrteilig ausgeführt sein) kann der Luftstrom insbesondere gleichzeitig zum Kühlen der elektronischen Bauteile (z.B. Leselicht, etc.) der PSU genutzt werden. Durch eine Druckdifferenzsteuerung kann die Drehzahl an die Anzahl der geöffneten Luftduschen (aktuelle Durchsatzmenge an Luft) angepasst werden. Als Vorteile ergeben sich:
- flache Bauweise möglich
- integrierte Kühlung
- nur ein Lüfter (für alle, z.B. drei Luftduschen) statt drei (bei drei Luftduschen)
- Die Führung der Luftströmung erfolgt insbesondere "seitlich", d.h. parallel zu Decke / Boden der Passagierkabine bzw. parallel zur Erstreckungsebene einer der Kabine zugewandten Oberfläche / Sichtseite der PSU.
- Einfache Luftdusche, neues Design möglich, Luftgeschwindigkeit und / oder "an-aus"-Funktion für den Luftstrom elektronisch regelbar (Toucheingabe, Schalter, etc.)

Insbesondere kann die Einlassöffnung als Lamellenöffnung zur Luftzuführung ausgeführt werden und insbesondere mit einer Lautsprecheröffnung kombiniert werden.

Weitere Merkmale, Wirkungen und Vorteile der Erfindung ergeben sich aus der nachfolgenden Beschreibung eines bevorzugten Ausführungsbeispiels der Erfindung sowie den beigefügten Figuren. Dabei zeigen, jeweils in einer schematischen Prinzipskizze:
- Figur 1: einen Ausschnitt aus einer Passagierkabine mit erfindungsgemäßer PSU mit drei Ventilatoren und Luftduschen,
- Figur 2: und einer alternativen Ausführungsform mit einem einzigen Ventilator und zwei Luftduschen sowie Zusatzkomponenten.

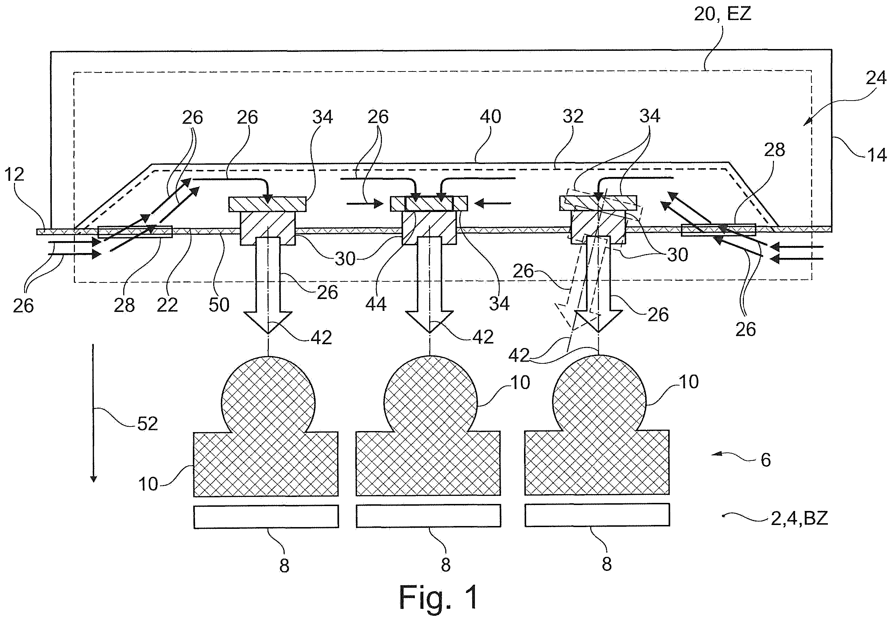

Figur 1 zeigt einen Ausschnitt aus einem Passagierflugzeug 2 bzw. dessen Passagierkabine 4. In der Passagierkabine 4 sind eine Mehrzahl von Sitzreihen 6 angeordnet, von denen in Figur 1 exemplarisch eine dargestellt ist. Die Sitzreihe 6 enthält drei Sitzplätze 8. Auf jedem der Sitzplätze 8 hat ein Passagier 10 Platz genommen. Das Passagierflugzeug 2 befindet sich in einem Betriebszustand BZ, das heißt während eines Fluges. Die Passagierkabine 4 weist eine Decke 12 auf, an der sich ein Passagierservicekanal PSC 14 befindet, der über den Sitzplätzen 8 angeordnet ist.

In den PSC 14 ist eine PSU 20 in einem Einbauzustand EZ seit der diesbezüglichen Fertigstellung der Passagierkabine 4 fest montiert. Auch die PSU 20 befindet sich zusammen mit dem gesamten Flugzeug 2 im Betriebszustand BZ.

Die PSU 20 weist einen Grundkörper 22 auf, mithilfe dessen sie mechanisch in dem Einbauzustand EZ im PSC 14 montiert bzw. fixiert ist. An dem Grundkörper 22 ist eine Luftführung 24 angeordnet. Die Luftführung 24 ist dazu eingerichtet, Kabinenluft 26 zu führen bzw. durch sich hindurchzuleiten, die in ihrer Strömungsrichtung den Figuren durch Pfeile symbolisch dargestellt ist.

Die Luftführung 24 weist zwei Einlassöffnungen 28 auf, durch welche im Betriebszustand BZ Kabinenluft 26, also im Freiraum der Passagierkabine 4 frei / ungeführt vorhandene Luft, aus der Passagierkabine 4 in die PSU 20 bzw. die Luftführung 24 einströmen bzw. eingesaugt kann.

Die Luftführung 24 enthält außerdem drei Luftduschen 30, welche dazu dienen, die eingesaugte Kabinenluft 26 aus der Luftführung 24 gezielt wieder in die Passagierkabine 4 zurückströmen zu lassen, nun jedoch, um je einen der drei Sitzplätze 8 und damit der Passagiere 10 (falls gewünscht) mit Kabinenluft 26 zu belüfteten.

Die Luftführung 24 weist einen Luftkanal 32 auf. Dieser dient dazu, die Einlassöffnungen 28 mit den Luftduschen 30 zu verbinden und die Kabinenluft 26 von den

Einlassöffnungen 28 zu den Luftduschen 30 zu führen. Der Luftkanal 32 bildet dabei eine luftdichte Verbindung zwischen den jeweiligen Komponenten. Kabinenluft 26 kann also ausschließlich durch die Einlassöffnungen 28 in die Luftführung 24 einströmen und diese wiederum ausschließlich durch die Luftduschen 30 verlassen.

Die Luftführung 24 enthält außerdem drei Ventilatoren 34, welche die Förderung der Kabinenluft 26 von den Einlassöffnungen 28 zu den Luftduschen 30 und damit deren Einsaugen an den Einlassöffnungen 28 bewirken, mit anderen Worten den aus den Luftduschen 30 austretenden Luftstrom von Kabinenluft 26 ventilatorisch bewirken bzw. verursachen.

Durch die Luftführung 24 wird ausschließlich die Kabinenluft 26 transportiert, eine Schnittstelle zu einem (nicht dargestellten) Klimasystem, Klima- / Belüftungsverrohrung usw. des Passagierfluges Flugzeuges 2 besteht nicht.

Der Luftkanal 32 ist hier gestrichelt symbolisch angedeutet. Konkret wird dieser wie folgt gebildet:
Die PSU weist ein Gehäuse 40 auf, welches anhand eines Teils seiner Wandungen einen Teil der Wandungen des Luftkanals 32 bildet. Mit anderen Worten ist ein Teil des Luftkanals 32 als Teil des Gehäuses 40 gebildet. Lediglich zur Verdeutlichung sind in der Figur Gehäuse 40 und Luftkanal 32 mit Abstand zueinander angedeutet.

Die Luftduschen 30 sind bezüglich einer Abstrahlrichtung 42 durch die Passagiere 10 einstellbar. Die Abstrahlrichtung 42 ist die Mittenrichtung / Zentralstrahl, in welcher Kabinenluft 26 im Betriebszustand BZ aus den Luftduschen 30 ausströmt (falls die bestimmte Luftdusche 30 zum Ausströmen geöffnet / eingestellt ist. Dies kann der Passagier 10 wählen, siehe unten. In Figur 1 ist die Einstellbarkeit für die rechte der drei Luftduschen 30 durch Strichelung dargestellt. Die Verstellung erfolgt hier händisch, indem ein Passagier 10 die Luftdusche 30 greift und händisch bezüglich ihrer Ausrichtung verstellt / verkippt / verschwenkt.

Jeder der Luftduschen 30 ist genau einer der Ventilatoren 34 zugeordnet und hier fest an diesen montiert, sodass die Ventilatoren 34 bei Verschwenken der Luftduschen 30 bzw. deren Abstrahlrichtung 42 mit verschwenkt werden.

Die Ventilatoren 34 enthalten jeweils eine Drehzahlsteuerung 44, welche symbolisch lediglich für die mittlere der drei dargestellten Luftduschen 30 in der Figur angedeutet ist. Die Drehzahlsteuerung 44 beeinflusst die Drehzahl der Ventilatoren 34 und verändert somit die Stärke des Luftstromes der austretenden Kabinenluft 26. Die Drehzahlsteuerung 44 und damit Drehzahl ist hierbei sowohl durch die Passagiere 10 als auch zentral im Passagierflugzeug 2 einstellbar, letzteres anhand eines nicht weiter dargestellten CMS (Cabin Management System, Kabinenmanagementsystem), die von Flugpersonal bzw. automatisch durch das Bordsystem des Passagierflugzeuges 2 steuerbar ist. Durch Senken der Drehzahl des Ventilators 34 auf Null kann der Luftstrom von Kabinenluft 26 aus der entsprechenden Luftdusche 30 gestoppt werden.

Jede der Luftduschen 30 ist von den Passagieren 10 hinsichtlich ihrer individuellen Durchlassmenge an Kabinenluft 26 einstellbar. Dies geschieht hier durch die individuelle Drehzahlregelung jedes einzelnen Ventilators 34.

Die PSU 20 bzw. deren Gehäuse 40 weist einen Oberflächenabschnitt 50 auf, welcher im Einbauzustand EZ der Passagierkabine 4 zugewandt ist und eine Sichtseite / Sichtoberfläche der PSU 20 bildet, welche also von der Passagierkabine 4 aus sichtbar ist. Die Einlassöffnungen 28 sind als Teil dieses Oberflächenabschnitts 50 ausgeführt und somit Teil der Sichtoberfläche. Die Einlassöffnungen 28 befinden sich somit an der Decke 12 der Passagierkabine 4 und saugen dort im Betriebszustand BZ unverbrauchte Kabinenluft 26 an. Denn die Passagierkabine ist anderweitig mit Hilfe einer nicht näher erläuterten Klimaverrohrung von Kabinenluft 26 durchströmt. In der Passagierkabine 4 verläuft die generelle Strömung der Kabinenluft 26 dabei von der Decke 12 aus (Einströmung in die Kabine 4) in Richtung zu einem nicht dargestellten Boden (Ausströmung aus der Kabine 4) hin, also von "oben nach unten" in Richtung des Pfeils 52.

Die Einlassöffnungen 28 sind hierbei als Gitter, Lamellen oder Spalte im Oberflächenabschnitt 50 ausgeführt, was in der Figur nicht näher dargestellt ist.

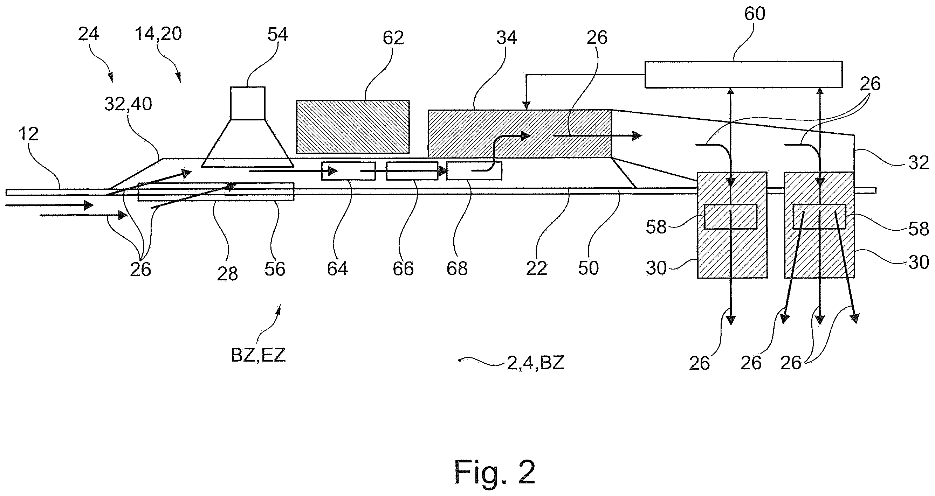

Figur 2 zeigt einen Ausschnitt aus Figur 1. Hier ist allerdings eine alternative PSU 20, ebenfalls im Einbauzustand EZ, in den PSC 14 eingebaut.

Die PSU 20 enthält zwei Lautsprecher 54, die dazu dienen, Borddurchsagen im Passagierflugzeug 2 an die Passagiere 10 auszugeben. Den Lautsprechern 54 sind Schallöffnungen 56 im Oberflächenabschnitt 50 der PSU 20 zugeordnet, durch welche der von den Lautsprechern 54 innerhalb der PSU 20 bzw. des Gehäuses 40 erzeugte, nicht dargestellte Schall durch den Oberflächenabschnitt 50 bzw. die Wand des Gehäuses 40 in die Passagierkabine 4 gelangt. Die Einlassöffnungen 28 sind hier als die Schallöffnungen 56 ausgeführt bzw. mit diesen identisch. Mit anderen Worten existiert eine gemeinsame Öffnung, welche sowohl die Schallöffnung 56 als auch die Einlassöffnung 28 darstellt.

Die PSU 20 enthält hier lediglich einen einzigen Ventilator 34. Die PSU 20 enthält hier außerdem nur zwei Luftduschen 30, wobei beide gemeinsam von dem einzigen Ventilator 34 mit Kabinenluft 26 versorgt werden.

Die Durchlassmenge der Luftduschen 30 ist auch hier individuell von den Passagieren 10 für jede der Luftduschen 30 einstellbar. Dies geschieht hier durch Einstellung eines mechanischen Luftventils 58, welches in jeder der Luftduschen 30 enthalten ist und händisch von den Passagieren 10 verstellbar ist. So kann insbesondere der Luftstrom der Kabinenluft 26 aus der Luftdusche 30 auch vollständig gestoppt werden.

Die PSU 20 enthält eine Druckdifferenzsteuerung 60. Diese ist dazu eingerichtet, die aktuelle Drehzahl des einzigen Ventilators 34 an die aktuell eingestellten Durchlassmengen beider Luftduschen 30 anzupassen (also die Einstellung der Luftventile 58). So kann bei Variation des Luftventils 58 der einen Luftdusche 30 die Drehzahl so angepasst werden, dass der Luftstrom der anderen Luftdusche 30 nicht geändert wird.

Die PSU 20 enthält ein Elektronikbauteil 62, hier nur symbolisch angedeutet Leseleuchten für die Sitzplätze 8, welchen die PSU 20 zugeordnet ist. Das Elektronikbauteil 62 ist mit thermisch wärmeabführendem Kontakt zum Luftkanal 32 angeordnet. Mit anderen Worten führt die durch den Luftkanal 32 strömende Kabinenluft 26 Wärme vom Elektronikbauteil 62 ab und sorgt so für dessen Kühlung. Die Kühlung bildet damit einen Nebeneffekt der Zuführung von Kabinenluft 26 an die Passagiere 10 bzw. Sitzplätze 8.

Die PSU 20 bzw. Luftführung 24 enthält außerdem ein lonisiermodul 64 sowie ein Entkeimungsmodul 66 und ein Temperaturmodul 68. Das lonisiermodul 64 dient dazu, die durch den Luftkanal 32 strömende Kabinenluft 26 zu lonisieren, das Entkeimungsmodul 66 dazu, um diese zu entkeimen und das Temperaturmodul 68 dazu, um diese, je nach Einstellung bzw. Wunsch der Passagiere 10, zu wärmen oder zu kühlen.

### Bezugszeichenliste

- 2: Passagierflugzeug
- 4: Passagierkabine
- 6: Sitzreihe
- 8: Sitzplatz
- 10: Passagier
- 12: Decke
- 14: PSC
- 20: PSU
- 22: Grundkörper
- 24: Luftführung
- 26: Kabinenluft
- 28: Einlassöffnungen
- 30: Luftdusche
- 32: Luftkanal
- 34: Ventilator
- 40: Gehäuse
- 42: Abstrahlrichtung
- 44: Drehzahlsteuerung
- 50: Oberflächenabschnitt
- 52: Pfeil
- 54: Lautsprecher
- 56: Schallöffnung
- 58: Luftventil
- 60: Druckdifferenzsteuerung
- 62: Elektronikbauteil
- 64: lonisiermodul
- 66: Entkeimungsmodul
- 68: Temperaturmodul

- BZ: Betriebszustand
- EZ: Einbauzustand

## Patentansprüche

1. PSU (20) für eine bestimmungsgemäße Passagierkabine (4) eines Passagierflugzeugs (2) mit einer Mehrzahl von Sitzplätzen (8) für Passagiere (10) und wenigstens einem über den Sitzplätzen (8) angeordneten PSC (14),
- mit einem Grundkörper (22), der dazu eingerichtet ist, die PSU (20) in einem bestimmungsgemäßen Einbauzustand (EZ) im PSC (14) zu montieren,
- mit einer am Grundkörper (22) angeordneten Luftführung (24),
- die wenigstens eine Einlassöffnung (28) und wenigstens eine Luftdusche (30) und einen die Einlassöffnungen (28) luftdicht mit den Luftduschen (30) verbindenden Luftkanal (32) enthält,
- und die im Einbauzustand (EZ) zur Führung von ausschließlich in der Passagierkabine (4) frei vorhandene Kabinenluft (26) eingerichtet ist,
- wobei jede der Luftduschen (30) im Einbauzustand (EZ) zur Belüftung wenigstens eines der Sitzplätze (8) mit Kabinenluft (26) eingerichtet ist,
- wobei die Luftführung (24) wenigstens einen Ventilator (34) enthält, und die Ventilatoren (34) im Einbauzustand (EZ) zur Förderung der Kabinenluft (26) von den Einlassöffnungen (28) durch den Luftkanal (32) zu den Luftduschen (30) eingerichtet sind.

2. PSU (20) nach Anspruch 1,
**dadurch gekennzeichnet, dass**
die PSU (20) ein Gehäuse (40) aufweist, und zumindest ein Teil des Luftkanals (32) als zumindest Teil des Gehäuses (40) ausgeführt ist.

3. PSU (20) nach einem der vorhergehenden Ansprüche,
**dadurch gekennzeichnet, dass**
wenigstens eine der Luftduschen (30) bezüglich einer Abstrahlrichtung (42) der Kabinenluft (26) einstellbar ist.

4. PSU (20) nach einem der vorhergehenden Ansprüche,
**dadurch gekennzeichnet, dass**
wenigstens einer der Ventilatoren (34) eine einstellbare Drehzahlsteuerung (44) aufweist.

5. PSU (20) nach einem der vorhergehenden Ansprüche,
**dadurch gekennzeichnet, dass**
die PSU (20) einen im Einbauzustand (EZ) der Passagierkabine (4) zugewandten Oberflächenabschnitt (50) aufweist, und wenigstens eine der Einlassöffnungen (28) als Teil des Oberflächenabschnitts (50) ausgeführt ist.

6. PSU (20) nach Anspruch 5,
**dadurch gekennzeichnet, dass**
wenigstens eine der Einlassöffnungen (28) als Gitter und/oder Spalt und/oder Lamellenanordnung im Oberflächenabschnitt (50) ausgeführt ist.

7. PSU (20) nach einem der Ansprüche 5 bis 6,
**dadurch gekennzeichnet, dass**
die PSU (20) einen Lautsprecher (54) und eine diesem zugeordnete Schallöffnung (56) in dem Oberflächenabschnitt (50) enthält, wobei wenigstens ein Teil wenigstens einer der Einlassöffnungen (28) als zumindest Teil der Schallöffnung (56) ausgeführt ist.

8. PSU (20) nach einem der Ansprüche 1 bis 7,
**dadurch gekennzeichnet, dass**
jeder der Luftduschen (30) genau einer der Ventilatoren (34) zugeordnet ist.

9. PSU (20) nach einem der Ansprüche 1 bis 7,
**dadurch gekennzeichnet, dass**
die PSU (20) einen einzigen Ventilator (34) für wenigstens zwei der Luftduschen (30) gemeinsam aufweist.

10. PSU (20) nach Anspruch 9,
**dadurch gekennzeichnet, dass**
wenigstens zwei der Luftduschen (30) individuell hinsichtlich ihrer Durchlassmenge an Kabinenluft (26) einstellbar ist.

11. PSU (20) nach einem der vorhergehenden Ansprüche,
**dadurch gekennzeichnet, dass**
die PSU (20) eine Druckdifferenzsteuerung (60) enthält, die dazu eingerichtet ist, eine aktuelle Drehzahl der Ventilatoren (34) der PSU (20) an die aktuellen Durchlassmengen von Luftduschen (30) der PSU (20) anzupassen.

12. PSU (20) nach einem der vorhergehenden Ansprüche,
**dadurch gekennzeichnet, dass**
die PSU (20) wenigstens ein Elektronikbauteil (62) enthält, und zumindest ein Teil des Elektronikbauteils (62) mit thermisch wärmeabführendem Kontakt zum Luftkanal (32) angeordnet ist.

13. PSU (20) nach einem der vorhergehenden Ansprüche,
**dadurch gekennzeichnet, dass**
die Luftführung (24) ein lonisiermodul (64) und/ oder ein Entkeimungsmodul (66) und / oder ein Temperaturmodul (68) für jeweils zumindest einen Teil der geförderten Kabinenluft (26) enthält.
